# EUROPEAN PATENT APPLICATION

(11) **EP 4 439 368 A1**
(43) Date of publication of application: **02.10.2024**
(21) Application number: 23275049.7
(22) Date of filing: 30.03.2023
(51) Int. Cl.: G06F 21/86, G08B 29/04, G08B 13/14, H05K 5/02

(54) **TAMPER PROTECTION**

(71) Applicant: nCipher Security Limited, Cambridge CB1 2GA (GB)
(72) Inventor: BAKER, Kevin John, Cambridge CB1 2GA (GB)
(74) Representative: Marks & Clerk LLP

(57) **Abstract**

A hardware security module device comprises a sensor assembly comprising a sensor and a processing component. It further includes an enclosure comprising a cover and a base, the cover and base being mutually spaced apart in a spacing direction and sandwiching the sensor assembly. The sensor is configured to trigger the processing component when the cover is moved away from the sensor. The device includes a structure attached to the cover and projecting from the cover towards the base. The structure is configured to impact the sensor assembly upon lateral movement of the cover with respect to the base, so that lateral movement of the cover with respect to the base is obstructed.

## Description

### Technical field

The present invention concerns a device comprising tamper protection, and in particular a device comprising a sensor for detecting when a cover of the device is removed.

### Background

Various devices are designed to store and perform operations with sensitive data. For example, a Hardware Security Module (HSM) is a device that securely stores and manages cryptographic keys, and performs a set of cryptographic operations, such as generating a cryptographic key, performing encryption and decryption, or performing digital signature and verification operations.

Such devices may comprise mechanisms that protect against a malicious third party tampering with the device. For example, some features of a device provide tamper resistance, and some features of a device provide tamper detection, i.e. triggering an alarm state when tampering is detected.

There is a continuing need to improve the security of such devices.

### Summary

A device such as a HSM device may comprise a sensor to detect removal of a cover (lid) of the device, which could indicate a tamper attempt. However, such tamper detection may be circumvented by partly sliding off the cover, e.g. if the cover is laminar, translating the cover in its plane away from a position in which the cover closes an opening of a chamber containing the sensor. To make such circumvention more difficult, the present disclosure provides a device with tamper protection as described herein.

Generally speaking, it is proposed that a structure is attached to the cover that obstructs lateral movement of the cover with respect to the sensor assembly.

According to a first aspect there is provided a device comprising: a sensor assembly comprising a sensor and a processing component; an enclosure comprising a cover and a base, the cover and base being mutually spaced apart in a spacing direction and sandwiching the sensor assembly, wherein the sensor is configured to trigger the processing component when the cover is moved away from the sensor; and a structure attached to the cover and projecting from the cover towards the base. The structure is configured to impact the sensor assembly upon lateral movement of the cover with respect to the base, whereby lateral movement of the cover with respect to the base is obstructed.

Lateral movement may be defined as movement transverse to the spacing direction.

Each of the cover and the base may have respective, substantially flat, opposed surfaces. That is, the surfaces may extend in parallel, spaced-apart planes. Each of the surfaces may be transverse to the spacing direction. Optionally, one or both of the cover and base may have a smaller thickness in the spacing direction than their extent in one or both directions transverse to the spacing direction.

The structure may comprise sidewalls arranged to at least partly surround the sensor assembly transverse to the spacing direction, so that lateral movement of the cover brings the sidewalls into contact with the sensor assembly. For example, the structure may have the shape of a cup or box with the sensor assembly at least partly located inside. The structure may comprise at least one bracket which connects the structure to the cover, e.g. at least one bracket integral with the walls and having a surface facing a portion of the surface of the cover and adhered to the cover. The bracket element may be provided as an element connecting the sidewalls, wherein the element is attached to the cover by an adhesive. By attaching the structure to the inside of the cover by an adhesive (instead of e.g. rivets going through the cover) a strong attachment can be provided without revealing the location of the sensor assembly from the outside of the device.

The cover may comprise a ferrous material and the sensor may comprise a magnetic sensor. The structure may then comprise a non-ferrous material, which prevents the structure from interfering with the magnetic field due to the magnetic sensor and the cover. In this way, the structure may be used with covers and magnetic sensors which were designed without taking the structure into account.

Alternatively or in addition the sensor may comprise a mechanical switch (e.g. a microswitch) that is depressed by the cover (e.g. via the structure).

The base may be configured to obstruct lateral movement of the sensor assembly with respect to the base.

In one possibility, the sensor assembly can be attached to the base. For example, the sensor assembly may be directly attached to the base by an adhesive.

Alternatively or additionally, the device may comprise a second structure attached to the base and projecting from the base towards the cover, the second structure being configured to impact the sensor assembly upon lateral movement of the base with respect to the cover, whereby lateral movement of the base with respect to the cover is obstructed.

The device may comprise a second structure attached to the base and projecting from the base towards the cover, the second structure being configured to impact the sensor assembly upon lateral movement of the base with respect to the cover, whereby lateral movement of the base with respect to the cover is obstructed.

The sensor assembly may comprise a second sensor configured to trigger the processing component into an alarm state when the base is moved away from the second sensor. The second sensor may comprise a magnetic sensor and or a mechanical switch. When the processing component is triggered into the alarm state it may perform security operations, such as deleting sensitive data in the processing component and/or transmitting alarm messages to other components of the HSM and/or to a user of the device.

The sensor assembly may comprise a tamper proof envelope enclosing at least the processing component and configured to trigger the processing component when physically breached. The tamper proof envelope may also enclose the sensor. The tamper proof envelope may comprise a mesh e.g. comprising metal.

The sensor assembly may be a one piece unit. That is, the sensor and processing unit and any other potential components of the sensor assembly may form a single physical unit. The sensor assembly may not be separable into respective separated portions while continuing to be operative to perform cryptographic operations.

The device may comprise a main processor connected to the processing component of the sensor assembly and configured to query the processing component (e.g. at start up and at intervals during operation of the device), wherein the processing component is configured to respond to a query to the using a cryptographic key stored at the processing component (e.g. a key provided to the processing component by the main processor at start up, prior to the first query). Thus, the main processor and processing component operate a challenge/response protocol. The processing component is configured to delete the key in response to being triggered into the alarm state. The main processor may be configured to determine that tampering has occurred if the processing component is unable to provide a correct response. A third party does not have the cryptographic key, as it is not exposed on the communication channel between the processing component and main processor during the challenge/response operation, and is therefore unable to create substitute valid responses.

According to a second aspect there is provided a method of manufacturing one or more devices according to the first aspect. The method comprises determining a location of the sensor assembly within the enclosure, automatically placing the sensor assembly at the location or automatically marking the location in the enclosure for placing the sensor assembly, wherein the step of determining comprises a random or pseudo-random process. It may be more difficult to bypass or attack the sensor assembly if the exact location inside the device is unknown. "Automatically" in this context refers to a process that does not involve actions by a human user, except optionally for initiating the process, e.g. by issuing a command to a manufacturing apparatus which performs the method.

The step of determining may comprise determining the location from a set of pre-determined available locations. For example, the internal device layout may provide a limited number of available locations for placing the sensor assembly and structure, and the method may comprise randomly (or-pseudo randomly) picking the location from the available locations.

In general, the method may comprise manufacturing a plurality of the devices, wherein the steps of determining the location and automatically placing or automatically marking are repeated for each device of the plurality so that the location of the sensor assembly in each device of the plurality is different. In this way, a third party who wishes to tamper with the security assembly finds it difficult to ascertain which portion of the enclosure to attack.

### Brief description of drawings

Figure 1 shows a schematic diagram of a HSM device;
Figure 2 shows a schematic cross section of a part of a device with tamper protection;
Figure 3 shows a schematic cross section of a part of another device with tamper protection;
Figure 4 shows a schematic cross section of a part of a further device with tamper protection;
Figure 5 shows a schematic diagram of a device with tamper protection; and
Figure 6 shows a flow diagram illustrating some of the steps of a method of forming one or more devices.

### Detailed description

Various devices may be designed to store and perform operations with sensitive data. For example, a Hardware Security Module (HSM) is a device that securely stores and manages cryptographic keys, and performs a set of cryptographic operations, such as generating a cryptographic key, performing encryption and decryption or performing digital signature and verification operations.

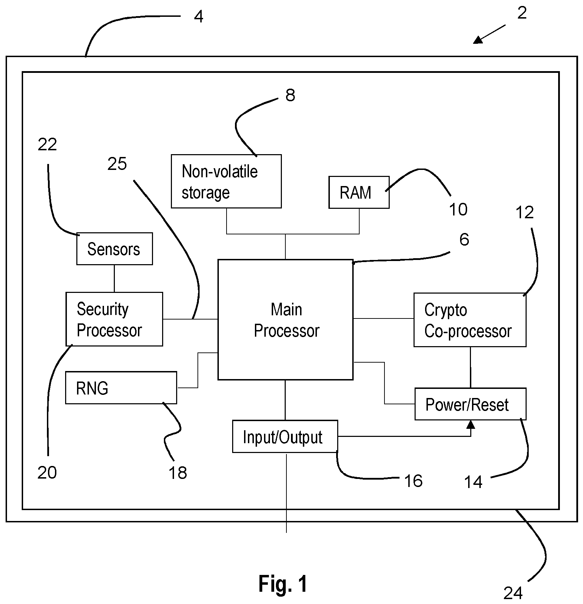

Figure 1 shows a schematic plan view of an example of an HSM device 2. The device 2 comprises an enclosure 4, for enclosing various hardware components including a main processor 6 (e.g. a CPU), non-volatile storage 8, random access memory (RAM) 10, crypto co-processor 12, power/reset component 14, input/output component 16, random number generator 18, security processor 20 (an example of a "processing component" referred to earlier), and one or more sensors 22. Various components such as the main processor 6 and the security processor 20 are mounted on a Printed Circuit Board (PCB) 24. The PCB 24 comprises electrical connections 25 for communicatively coupling various components to each other.

A user may store sensitive cryptographic material on the HSM. For example, one or more cryptographic application keys are associated with a user of the HSM device. The cryptographic application keys may be securely stored on the HSM. Alternatively, the cryptographic application keys may be encrypted with a master key and stored outside the HSM. The master key, or material that can be used to obtain the master key, is then securely stored inside the HSM. The crypto co-processor 12 performs various cryptographic functions in hardware, for example various standard encryption and decryption algorithms, and digital signature algorithms. The main processor 6 may offload various operations onto the crypto co-processor 12.

The security processor 20 is configured to detect an attempt to tamper with the device. The security processor 20 is configured to communicate with a plurality of sensors 22 located in the HSM. The sensors 22 are configured to monitor physical properties that may indicate an attempt to tamper with the HSM. The security processor 11 and the sensors 22 together provide tamper detection. The sensors may include one or more of: one or more temperature sensors (for example to monitor the temperature of the main processor 6 and/or the PCB 24), one or more voltage sensors and one or more current sensors. The security processor 20 is configured to detect an indication that the HSM is being or has been tampered with by monitoring the output of these sensors. If so, the security processor 20 is triggered into an alarm state.

In use, the security processor 20 is configured to communicate with the main processor 6. The security processor 20 provides information indicating whether or not the security of the Hardware Security Module (HSM) has been compromised. For example, upon being triggered in to the alarm state, the security processor 20 may send an indication to the main processor 6 that the HSM has been compromised. In response, the main processor 6 is configured to suspend start up and delete at least some stored cryptographic data, such as a key present in the main processor and/or the crypto-co-processor which is unencrypted.

Furthermore, upon being triggered into the alarm state, the security processor 20 may erase at least some cryptographic data within it. For example, at start up, the main processor 6 may provide the security processor 20 with a cryptographic key. Subsequently, in the start up operation and/or at intervals thereafter, the main processor 6 queries the security processor 20 in a challenge/response protocol. The security processor generates responses using the cryptographic key. The security processor 20 is configured to delete the cryptographic key in response to being triggered into the alarm state. The main processor 6 determines that tampering has occurred if the processing component fails provide a correct response, e.g. within a certain time period. A third party does not have the cryptographic key, as it is not exposed on the communication channel between the processing component and main processor during the challenge/response operation, and is therefore unable to create substitute valid responses.

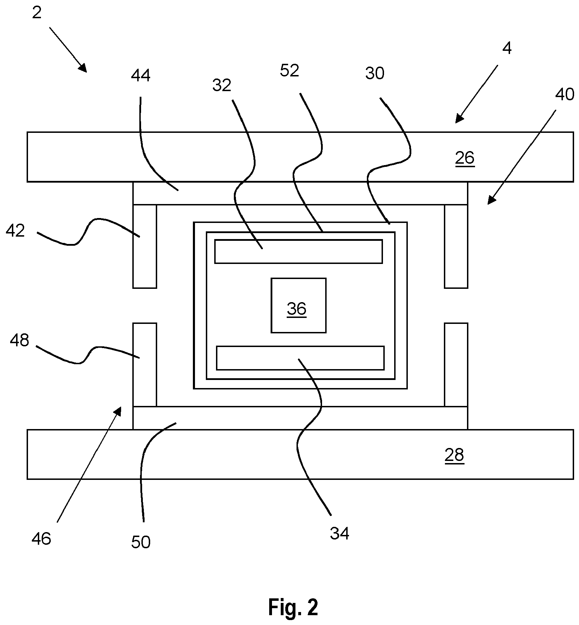

Figure 2 shows a schematic cross section of a part of a device 2 with tamper protection according to an embodiment. The same reference numerals are used in different figures to denote similar or equivalent features in order to aid understanding and are not intended to limit the illustrated embodiments. The device 2 comprises an enclosure 4 (only a part shown) comprising a cover 26 and a base 28. As viewed in Figure 2, the lower surface of the cover 26 and the upper surface of the base 28 are substantially planar, opposed to each other, and mutually spaced apart in a spacing direction, which is the vertical direction in Figure 2. A chamber is defined by the enclosure between the cover 26 and the base 29. Although not shown in Figure 2, the enclosure further includes walls to either side of the part of the enclosure shown in Figure 2 (i.e. outside Figure 2, respectively in the left and right directions) so that the enclosure substantially completely encloses the volume within the enclosure.

The device 2 comprises a sensor assembly 30 enclosed by the enclosure 4 and sandwiched between the cover 26 and the base 28. The sensor assembly 30 comprises a first sensor 32 and a second sensor 34, and a processing component 36 connected to the sensors 32 and 34.

The processing component 36 may be the security processor 20 of the HSM device 2 described in relation to Figure 1 above, or may be a separate processor for providing additional/complementary tamper protection alongside such a security processor 20. Similarly, the first and second sensors 32, 34 may be two of the sensors 22 described in relation to Figure 1 above.

The first sensor 32 is configured to detect if the cover 26 is moved away from the sensor 32, for example if the cover 26 is lifted away from the base 28. For example, the cover 26 may be formed of ferrous material and the first sensor 32 may be a magnetic sensor that forms a magnetic circuit with the cover 26. When the cover 26 is removed, the circuit breaks, and the sensor 32 triggers the processing component 36 into an alarm state, thereby detecting the potential tampering. The second sensor 24 is similarly arranged to detect if the base 28 is removed, and if so to trigger the processing component 36 into the alarm state.

The device further comprises a first structure 40 arranged to obstruct lateral movement of the cover 26 with respect to the sensor assembly 30. The structure 40 may thereby require the cover 26 (or base 28) to be lifted off (i.e. moved in the spacing direction) in order open the enclosure 4 and gain access to the interior components, which is then detected by the sensor assembly 30. The first structure 40 comprises sidewalls 42 connected by a base element 44. The first structure 40 may for example have the shape of a cup or box partly covering the sensor assembly 30. The first structure 40 is attached to the cover 26 by the base element 44 and the sidewalls 42 project from the cover 26 towards the base 28 and over a part of the sensor assembly 30. The first structure 40 may be attached to the cover 26 by an adhesive, such as a two component epoxy, which adheres the base element 44 to the cover 26. The base element 44 thus acts as a bracket for the sidewalls 42.

The sidewalls 42 may substantially surround the sensor assembly in (e.g. all) directions transverse to the spacing direction. That is, for any direction transverse to the spacing direction, there is a straight line extending in that direction which intercepts the sensor assembly 30 and, in both directions along the line from the sensor assembly, one of the sidewalls 42. It is to be appreciated though that one or both of the sidewalls may include gaps, provided that the gaps are not large enough for the sensor assembly to pass through the gaps. As a limiting case of this, the first structure 40 may be provided as a plurality of teeth projecting from the cover 26 towards the base 28, and defining, between neighbouring pairs of the teeth, gaps narrower than the length of the sensor assembly in the direction of the gap.

It is to be understood that whereas the cross-sectional view in Figure 2 is in a first plane including the spacing direction, Figure 2 would be substantially the same if it were in a second plane including the spacing direction and transverse to the first plane.

The first structure 40 is arranged to impact the sensor assembly 30 when the cover is moved laterally (e.g. to the left or right in Figure 2). The first structure 40 can thereby prevent the cover 26 from being slid off transverse to the spacing direction, in order to gain access to the interior of the enclosure 4 without triggering the sensor assembly 30. If lateral movement of the cover 26 is forced, then the first structure 40 may damage the sensor assembly 30 or otherwise move the sensor assembly 30 relative to the cover 26 and/or base 28 to cause the first or second sensor 32, 34 to trigger the processing component 36.

The device 2 comprises a second structure 46 arranged to obstruct lateral movement of the base 28 with respect to the sensor assembly 30. The second structure 46 is arranged to operate with respect to the base 28 in the same way that the first structure 40 is arranged to operate with respect to the cover 26 described above. The second structure 46 is arranged to impact the sensor assembly 30 when the base 28 is moved laterally with respect to the sensor assembly 30. The second structure 46 comprises sidewalls 48 connected by a base element 50. The base element 50 is attached to the base 28 with the sidewalls 48 projecting from the base 28 towards the cover 26 and over a part of the sensor assembly 30. The second structure 46 can thereby prevent the base 28 from being slid laterally relative to the sensor assembly 30 in order to gain access to the interior of the enclosure 4 without triggering the sensor assembly 30.

The sensor assembly 30 further comprises am anti-tamper envelope 52, which may comprise a metal mesh arranged to prevent or cause detection of a direct physical attack by for example drilling through the enclosure 4.

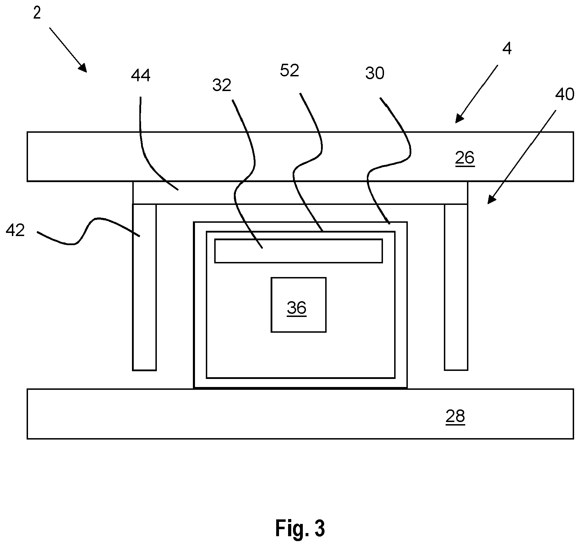

Figure 3 shows a part of a device 2 according to another embodiment. Similar to the embodiment described in relation to Figure 2 above, the device 2 comprises an enclosure 4 (only a part shown) comprising a cover 26 and a base 28, and a sensor assembly 30 enclosed by the enclosure 4 and sandwiched between the cover 26 and base 28. The sensor assembly 30 comprises a sensor 32 and a processing component 36 connected to the sensor 32.

The processing component 36 may be the security processor 20 of the HSM device 2 described in relation to Figure 1 above, or may be a separate processor for providing additional/complementary tamper protection alongside such a security processor 20. Similarly, sensors 32 may be part of the sensors 22 described in relation to Figure 1 above.

The sensor 32 is configured to detect if the cover 26 is moved away from the sensor 32, for example if the cover 26 is lifted off the base 28. For example, the first sensor 32 may be a magnetic sensor or a switch that is mechanically depressed by the cover 26 (via the base element 44 of the structure 40).

The sensor assembly 30 is directly attached to the base 28. For example, the sensor assembly 30 may be attached to the base 28 by an adhesive such as a two component epoxy.

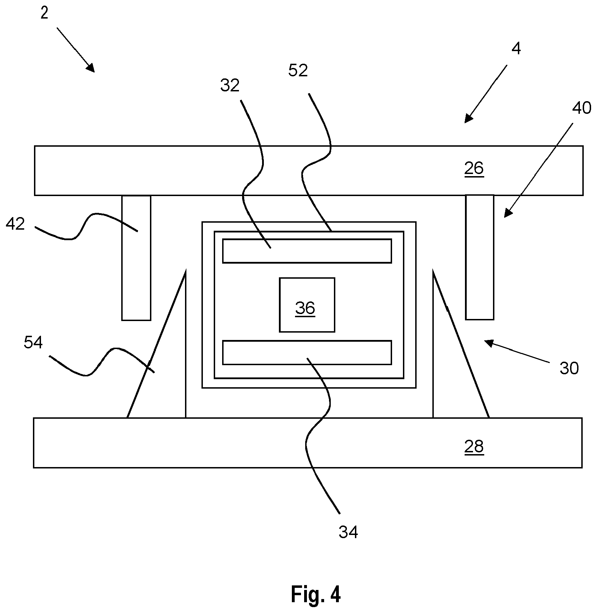

Figure 4 shows a part of a device 2 according to another embodiment. Similar to the embodiment described in relation to Figures 2 and 3 above, the device 2 comprises an enclosure 4 (only a part shown) comprising a cover 26 and a base 28, and a sensor assembly 30 enclosed by the enclosure 4 and sandwiched between the cover 26 and base 28. The sensor assembly 30 comprises a first sensor 32 and a second sensor 34, and a processing component 36 connected to the sensors 32 and 34. The sensor assembly 30 further comprises an element 54 fixed to and projecting from the base 28 towards the cover 26.

The processing component 36 may be the security processor 20 of the HSM device 2 described in relation to Figure 1 above, or may be a separate processor for providing additional/complementary tamper protection alongside such a security processor 20. Similarly, sensors 32 may be part of the sensors 22 described in relation to Figure 1 above.

The device 2 further comprises a structure 40 arranged to obstruct lateral movement of the cover 26 with respect to the sensor assembly 30. The structure 40 may thereby require the cover 26 (or base 28) to be lifted off (i.e. moved in the spacing direction) in order open the enclosure 4 and gain access to the interior components, which is then detected by the sensor assembly 30. The structure 40 comprises sidewalls 42 arranged to impact the element 54 of the sensor assembly 30 when the cover is moved laterally. The structure 40 and element 54 are arranged together to cause the cover to move away from the sensor assembly 30 when pushed laterally. The structure 40 and sensor assembly 30 can thereby prevent the cover 26 from being slid off without triggering the sensor assembly 30.

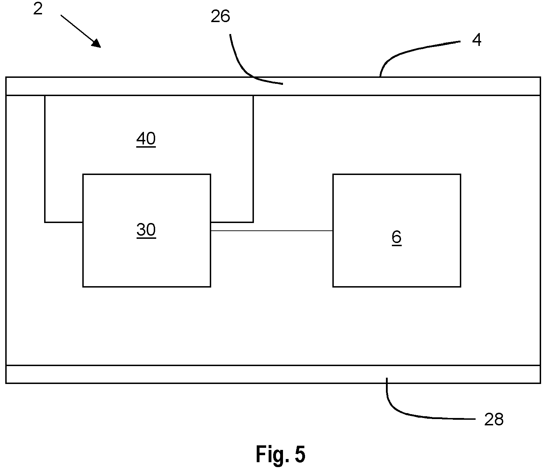

Figure 5 shows a schematic diagram of a device 2 with tamper protection according to an embodiment. The device 2 may be the device 2 described in relation to any one of Figures 1 to 4 above. The device comprises an enclosure 4 comprising a cover 26 and a base 28 and enclosing a main processor 6 and a sensor assembly 30 connected to the main processor 6. The sensor assembly 30 is configured to detect when the cover 26 is removed from the device 2. A structure 40 projecting from the cover 26 is arranged to obstruct lateral movement of the cover 26 relative to the sensor assembly 30.

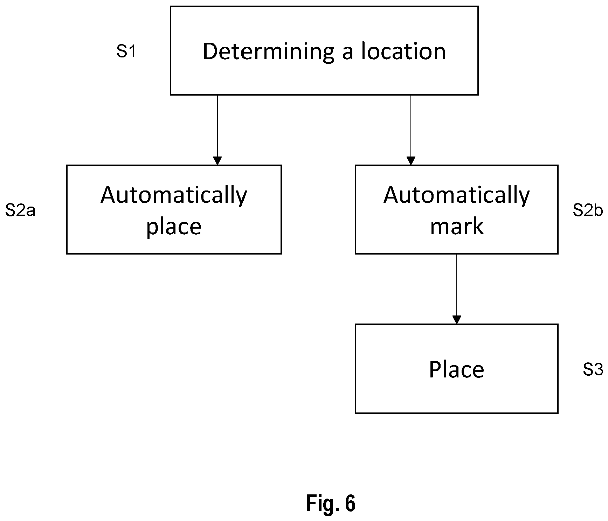

Figure 6 shows a flow diagram of some steps of a method of forming one or more devices as described herein. The method comprises determining a location of the sensor assembly within the enclosure (step S1). Here a "location" defines a cover location on the inwardly facing surface of the cover, and a corresponding base location on the inwardly facing surface of the base, where the two locations are in register, spaced apart in the spacing direction, when the cover is in place connected to the base. The determination comprises a random or pseudo-random process. The method further comprises automatically placing the sensor assembly at the location (step S2a) or automatically marking the location in the enclosure for placing the sensor assembly (step S2b). When the method comprises automatically marking the location, the method comprises a further step of placing the sensor assembly in the marked location (step S3).

The sensor assembly may be placed at the location by a process which leaves no indication of the location on the exterior of the device. It may include placing the first and second structures so as to surround the cover location and base location respectively, and securing (e.g. adhering) the first and second structures to the inwardly facing surfaces respectively of the cover and base. The cover is then connected to the base, with the sensor assembly located at the location, and surrounded by the first and second structures. Optionally, the sensor assembly may be adhered to one or both of the cover and base.

The steps can be repeated to form a plurality of devices with the sensor assembly in different locations within the enclosure.

While certain embodiments have been described, these embodiments have been presented by way of example only, and are not intended to limit the scope of the invention as claimed. Indeed the novel methods and apparatus described herein may be embodied in a variety of other forms; furthermore, various omissions, substitutions and changes in the form of methods and apparatus described herein may be made.

## Claims

**1.** A device comprising:
a sensor assembly comprising a sensor and a processing component;
an enclosure comprising a cover and a base, the cover and base being mutually spaced apart in a spacing direction and sandwiching the sensor assembly, the base being configured to obstruct lateral movement of the sensor assembly with respect to the base, wherein the sensor is configured to trigger the processing component when the cover is moved away from the sensor;
a structure attached to the cover and projecting from the cover towards the base, the structure being configured to impact the sensor assembly upon lateral movement of the cover with respect to the base, whereby lateral movement of the cover with respect to the base is obstructed.

**2.** A device according to claim 1, wherein the structure comprises sidewalls arranged to at least partly surround the sensor assembly transverse to the spacing direction, so that lateral movement of the cover brings the sidewalls into contact with the sensor assembly.

**3.** A device according to claim 2, wherein the structure comprises an element connecting the sidewalls, wherein the element is attached to the cover by an adhesive.

**4.** A device according to any one of the preceding claims, wherein the cover comprises a ferrous material and the sensor comprises a magnetic sensor.

**5.** A device according to claim 4, wherein the structure comprises a non-ferrous material.

**5.** A device according to any one of the preceding claims, wherein the sensor comprises a mechanical switch that is depressed by the cover.

**6.** A device according to any one of the preceding claims, wherein the sensor assembly is attached to the base.

**7.** A device according to any one of the preceding claims, wherein the sensor assembly comprises a second sensor configured to trigger the processing component into an alarm state when the base is moved away from the second sensor.

**8.** A device according to any one of the preceding claims, wherein the device comprises a second structure attached to the base and projecting from the base towards the cover, the second structure being configured to impact the sensor assembly upon lateral movement of the base with respect to the cover, whereby lateral movement of the base with respect to the cover is obstructed.

**9.** A device according to claim 8, wherein the second structure comprises sidewalls arranged to at least partly surround the sensor assembly transverse to the spacing direction, so that lateral movement of the base brings the sidewalls into contact with the sensor assembly.

**10.** A device according to any one of the preceding claims, wherein the sensor assembly comprises a tamper proof envelope enclosing at least the processing component and configured to trigger the processing component when physically breached.

**11.** A device according to any one of the preceding claims, wherein the sensor assembly is a one piece unit.

**11.** A device according to any one of the preceding claims, further comprising a main processor connected to the processing component of the sensor assembly and configured to query the processing component, wherein the processing component is configured to respond to a query using an encryption key stored at the processing component, and wherein the processing component is configured to delete the key in response to being triggered.

**12.** A method of manufacturing one or more devices according to any one of the preceding claims, the method comprising:
determining a location of the sensor assembly within the enclosure;
automatically placing the sensor assembly at the location or automatically marking the location in the enclosure for placing the sensor assembly;
wherein the step of determining comprises a random or pseudo-random process.

**13.** A method according to claim 12, wherein the step of determining comprises determining the location from a set of pre-determined available locations.

**14.** A method according to claim 12 or 13, wherein the method comprises manufacturing a plurality of the devices, and the steps of determining the location and automatically placing or automatically marking are repeated for each device of the plurality so that the location of the sensor assembly in each device of the plurality is different.
